(19) Europäisches Patentamt
European Patent Office
Office européen des brevets

(11) **EP 2 480 325 B1**

(12) **FASCICULE DE BREVET EUROPEEN**

(45) Date de publication et mention
de la délivrance du brevet:
**22.05.2019 Bulletin 2019/21**

(21) Numéro de dépôt: **10769023.2**

(22) Date de dépôt: **23.09.2010**

(51) Int Cl.:
**B01F 17/00** *(2006.01)*     **C05G 3/00** *(2006.01)*
**C05G 3/06** *(2006.01)*

(86) Numéro de dépôt international:
**PCT/FR2010/052001**

(87) Numéro de publication internationale:
**WO 2011/036413 (31.03.2011 Gazette 2011/13)**

(54) **FORMULATION AQUEUSE A PROPRIETES ANTI-MOTTANTE ET HYDROPHOBANTE**

WÄSSERIGE FORMULIERUNG MIT VERKLUMPUNGSINHIBIERENDEN UND HYDROPHOBISIERENDEN EIGENSCHAFTEN

AQUEOUS FORMULATION HAVING ANTI-CAKING AND HYDROPHOBISING PROPERTIES

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **23.09.2009 FR 0956557**

(43) Date de publication de la demande:
**01.08.2012 Bulletin 2012/31**

(73) Titulaire: **ARKEMA FRANCE**
**92700 Colombes (FR)**

(72) Inventeurs:
• **BARSACQ, Céline**
**F-69006 Lyon (FR)**
• **BIRKEN, Isabelle**
**F-69360 Serezin Du Rhône (FR)**
• **BARRETO, Gilles**
**F-69510 Messimy (FR)**

(74) Mandataire: **Schaefer, Anne-Sophie et al**
**ARKEMA France**
**Département Propriété Industrielle**
**420, rue d'Estienne d'Orves**
**92705 Colombes Cedex (FR)**

(56) Documents cités:
**DE-A1- 2 039 332     FR-A1- 2 290 248**
**GB-A- 1 383 718     JP-A- 2006 281 038**

**Description**

La présente invention concerne des formulations aqueuses destinées à être appliquées sur des produits minéraux pulvérulents ou granulés, afin d'éviter leur mottage et leur prise en eau. La présente invention concerne également le procédé d'application desdites émulsions sur lesdits produits minéraux, ledit procédé étant réalisé à température ambiante.

Plus précisément, la présente invention porte sur une formulation antimottante sous forme d'une émulsion de type huile-dans-eau, comprenant au moins une amine grasse primaire et au moins un agent hydrophobant lorsque l'amine grasse ne comprend pas de chaîne grasse alkyle supérieure à $C_{19}$. Cette formulation est applicable sur produits minéraux hygroscopiques pulvérulents ou granulés. Ces formulations sont liquides à température ambiante.

Parmi les produits minéraux concernés, on peut citer les granulés d'engrais minéraux, tels que les nitrates d'ammonium, sulfates et phosphates d'ammonium, chlorure de potassium et les engrais complexes à base azote et/ou phosphore et/ou potassium et notamment ceux de type NPK, NP, PK, et autres.

Les engrais minéraux sont en général produits sous forme de granulés, qui sont stockés en vrac ou en sacs. Lors de ce stockage, sous l'influence de la pression, de la température ou des fluctuations climatiques, plus particulièrement des variations du degré d'hygrométrie, les engrais sont le siège de modifications physiques qui altèrent l'indépendance des grains dont ils sont constitués.

Pour minimiser ce phénomène, les fabricants d'engrais ont, depuis de nombreuses années, travaillé sur le procédé de fabrication et sur la formulation des granulés, de manière à produire des grains de granulométrie resserrée et de dureté la plus élevée possible, afin d'en limiter les surfaces en contact.

Malgré toutes les améliorations au niveau des procédés de fabrication, il reste cependant nécessaire d'effectuer un traitement externe des granulés, traitement externe qui intervient en fin de procédé, avant le stockage desdits granulés.

Parmi les techniques de traitement externe, faisant l'objet d'une abondante littérature, on peut citer le traitement par des solides pulvérulents, dont le talc naturel ou aminé, les argiles, la craie, et autres. Ces particules minérales viennent s'intercaler entre les granulés d'engrais afin d'en limiter l'aire de contact.

Cette technique n'est en général pas utilisée seule, car elle présente le désavantage d'augmenter la génération de poussière, qui peut être problématique lors de la manipulation de l'engrais tant par le producteur que l'utilisateur final.

Une autre technique, la plus couramment utilisée, en combinaison ou en remplacement de celle indiquée ci-dessus, est la pulvérisation à chaud (aux alentours de 80°C) de formulations anti-mottantes contenant des additifs dissous dans des huiles et/ou des cires. Il s'agit essentiellement d'huiles et cires minérales, les produits d'origine végétale ayant tendance à s'oxyder à la température de pulvérisation.

Parmi les additifs entrant dans les formules anti-mottantes, on trouve principalement les acides gras, les sels métalliques d'acide gras et les amines grasses primaires, parmi lesquelles les amines grasses primaires en $C_{16}$-$C_{18}$, qui montrent une grande efficacité en particulier sur les engrais azotés contenant du nitrate d'ammonium, et qui restent la substance anti-mottante de référence sur ce type d'engrais.

Malgré des tentatives pour introduire d'autres additifs antimottants, comme par exemples des alkylarylsulfonates (US 1 214 006), des lignosulfonates (US 4 846 871), des produits basés sur des sous-produits d'origine naturelle (WO 2006/091076), et d'autres vecteurs gras, tels que huiles végétales, esters méthyliques d'acide gras, glycérol, (EP 1 627 865 qui revendique l'utilisation de sels métalliques d'un acide gras aliphatique dans des esters méthyliques ou éthyliques d'acide gras, du glycérol, des glycols ou leurs oligomères/polymères) force est de constater par l'homme de l'art que les formulations sur base amine grasse dans huile/cire minérales sont encore aujourd'hui omniprésentes.

Des formulations antimottantes, basées sur cette technologie, sont par exemple vendues par la société demanderesse sous le nom de gamme Fluidiram® et Lilamin®. Chauffées et pulvérisées à 75-80°C, ces formulations permettent d'accéder à de bonnes performances antimottantes à raison d'environ 1 kg/tonne

(kg/T) de formulation sur l'engrais pour les engrais simples (voire moins si l'engrais est sous forme de « prills ») et de 1,5 kg/T à 2 kg/T sur les engrais complexes (tels que NPK, NP, PK, précédemment cités).

Le principal inconvénient de ces formulations est qu'elles sont pâteuses à solides à température ambiante et doivent donc être fondues pour être déposées sur les granulés d'engrais. Les plate-formes de production d'engrais par voie chimique doivent être équipées de cuve de stockage chauffées, afin que la formulation antimottante, livrée à 70-80°C, soit maintenue et pulvérisée à cette température. L'ensemble des tuyaux, canalisations, vannes, transportant la formulation antimottante doit être calorifugé afin d'éviter tout figeage et bouchage. Ces formulations antimottantes doivent également être transportées à chaud du lieu de production jusqu'au lieu d'utilisation.

L'autre inconvénient auquel doit faire face l'homme de l'art est la dégradation thermique des amines grasses à chaud : sous air, la dégradation, mesurée par la perte en alcalinité, peut atteindre 10 % en quelques jours, dès lors que la température dépasse 75°C. Industriellement, ces cuves sont généralement chauffées à l'aide de vapeur, et il n'est pas rare de rencontrer des points chauds, ce qui accentue encore cette dégradation. Ceci se traduit par une perte d'efficacité en antimottage et par un dégagement d'ammoniac gazeux. Ce dernier est un puissant irritant des voies respiratoires, et peut être toxique par inhalation. En outre l'odeur de ce gaz est désagréable dès qu'une concentration allant de 0,6 ppm à 53 ppm dans l'air est présente.

Il y a donc un intérêt évident à pouvoir proposer une formulation chargée en amine grasse et qui soit manipulable du producteur à l'utilisateur à une température plus basse, sans dégagement d'ammoniac.

Il est possible de trouver commercialement des formulations liquides à température ambiante, mais celles-ci sont moins efficaces que les formulations classiques pâteuses à solides à base d'amines grasses citées précédemment, en particulier sur les engrais azotés contenant du nitrate d'ammonium. De telles formulations liquides sont par exemple les formulations à base d'urée-formol, dédiées à l'antimottage de l'urée, et qui ne sont absolument pas adaptées pour les autres engrais azotés ; les solutions d'alkyl-arylsulfonates de sodium, mais dont l'efficacité est inférieure à celle des amines grasses vis-à-vis du nitrate d'ammonium, les formulations d'amine grasse dans l'huile, sans cire. Dans ce cas, la concentration en amine est limitée à 5% ou 6%, pour pouvoir garder une solution limpide fluide.

Au-delà de cette limite de solubilité, des cristaux apparaissent et ont tendance à sédimenter, l'utilisation d'une telle formulation à température ambiante devient ainsi impossible. De plus, avec une teneur en amine grasse limitée à 5%, l'efficacité en antimottage sur nitrate d'ammonium est insuffisante. Avec une telle teneur, il faudrait alors en pulvériser 2 à 3 fois plus qu'un antimottant pâteux classique (plus concentré en amine grasse) pour avoir une performance anti-mottante correcte. Outre l'aspect économique qui rend cette solution peu attractive, elle n'est pas satisfaisante techniquement. En effet, le fait de pulvériser une quantité trop importante de vecteur (huile) peut avoir des répercussions négatives parmi lesquelles on peut citer : migration dans le grain, fissuration, génération de poussière, et autres. Par ailleurs, la quantité de produits organiques présents en surface d'engrais AN 33,5% est limitée pour des questions de sécurité, et un tel taux ne serait pas conforme aux limitations réglementaires (limitation à 2 kg/T exprimée en carbone).

Il y a donc un intérêt à pouvoir diminuer la quantité d'huile présente dans les formulations antimottantes contenant une amine grasse.

Toutefois, une formulation contenant 5 à 6% d'amine grasse en $C_{16}$-$C_{18}$ n'apporte aucune protection hydrophobante, c'est-à-dire aucune limitation de la prise en eau lorsque l'engrais est soumis à une humidité supérieure à l'humidité critique relative de l'engrais.

Le document GB1383718 décrit des émulsions comprenant de 1 % à 50% en poids d'une amine et de 99% à 50% en poids d'eau, lesdites émulsions étant utilisées pour réduire l'agglomération de particules minérales. Le document FR2290248 divulgue des produits anti-mottants pour substances pulvérulentes ou granuleuses. Ces produits anti-mottants sont un mélange d'un tensioactif à base d'alcool gras et de stéarylamine, sans qu'il soit question dans ce document d'émulsion de type huile-dans-eau. Il apparaît donc clairement qu'il n'existe pas sur le marché de formulation antimottante liquide, pulvérisable à plus basse température (température inférieure à la température de dégradation des aminés, voire à température ambiante) et qui soit performant du point de vue antimottage et hydrophobation, sur des engrais minéraux, en particulier de type ammonitrates, à un taux similaire à celui utilisé avec les formulations classiques.

De manière surprenante, la société demanderesse a découvert qu'il était possible de satisfaire ces critères par l'intermédiaire d'une émulsion aqueuse de phase grasse contenant au moins une amine grasse, ladite émulsion étant pulvérisable à une température comprise entre 0°C et 60°C sur un minéral pulvérulent ou granulé, tel qu'un engrais, par exemple sous forme de granulés, lequel minéral pouvant être à température ambiante lors de la pulvérisation.

En effet, depuis de nombreuses années, l'homme du métier recherche comment limiter la quantité d'eau dans les engrais, pour en limiter le mottage, et considère que l'additif, tel qu'une amine grasse, est efficace s'il est dispersé correctement à la surface de l'engrais soit à l'état dissous, soit à l'état fondu à des températures supérieures à 60°C, ce qui est le cas des amines grasses formulées dans des huiles ou cires minérales, le tout étant pulvérisé à chaud (généralement 75°C à 80°C).

Des tentatives d'émulsions aqueuses à propriétés antimottantes ont déjà été proposées, cependant aucune d'entre elles ne correspond à une formulation utilisable à une température allant de l'ambiante, jusqu'à des températures inférieures à 60°C, et permettant ainsi le maintien de l'efficacité dans le temps de la substance antimottante (typiquement une amine grasse), en particulier pour les engrais azotés riches en nitrate d'ammonium, tout en évitant leur dégradation lors du stockage à chaud et de la pulvérisation à chaud (75°C à 80°C).

Ainsi, le brevet FR 2 221 175 divulgue des antimottants pseudo-solubles dans l'eau qui sont des amides (mono-, di-, tétra-, pentamide, et autres) ou des polyamines (polyéthylènepolyamine, biguanidine, polypropylènepolyamine).

Les brevets RU 2 152 375 et US 257 478 décrivent des émulsions d'amine dont une partie est sous forme de chlorure ou salifiée avec de l'acide chlorhydrique. Le recours à une salification avec l'acide chlorhydrique pour arriver à mettre en solution une amine est une technique connue. L'inconvénient d'une telle formulation est cependant la présence d'ions chlorures qui sont considérés comme néfastes à la stabilité des engrais dans le temps, notamment les engrais de type ammonitrate.

Le brevet EP 0 081 008 décrit spécifiquement une émulsion inverse de type eau-dans-huile contenant une amine grasse. Cette solution n'est toutefois pas acceptable dans la mesure où les émulsions inverses ne permettent pas de vaporiser une partie de l'eau lors de la pulvérisation, ce qui peut s'avérer gênant pour le revêtement de granulés hygroscopiques ou hydrosolubles.

La société demanderesse a maintenant découvert qu'il est possible de préparer des émulsions de type huile-dans-eau qui présentent des propriétés à la fois antimottantes et hydrophobantes lorsqu'elles sont pulvérisées sur des produits minéraux hygroscopiques pulvérulents ou granulés (tels que des engrais), à une température comprise entre 0°C et 60°C.

Typiquement, la phase huile de l'émulsion selon la présente invention comprend au moins une amine grasse primaire et au moins un agent hydrophobant lorsque l'émulsion ne comprend pas d'amine(s) grasse(s) comportant une chaîne alkyle supérieure ou égale à $C_{19}$.

Cette formulation est liquide et stable à température ambiante, sur un à plusieurs mois. Elle est manipulable et pulvérisable à une température comprise entre 0°C et 60°C, ce qui évite notamment toute dégradation de l'amine grasse et tout risque de relargage d'ammoniac gazeux, mais surtout permet la pulvérisation sur les produits minéraux pulvérulents ou granulés dans la même gamme de température (0°C à 60°C).

Ceci représente un avantage considérable si l'on considère qu'aujourd'hui toutes les formulations antimottantes pour engrais doivent être transportées, stockées et pulvérisées à chaud (températures supérieures à 80°C).

Comme indiqué précédemment, les émulsions selon la présente invention sont manipulables et pulvérisables à une température comprise entre 0°C et 60°C, c'est-à-dire qu'elles présentent des viscosités adaptées pour être véhiculées, pompées et pulvérisées dans cette gamme de température.

Ainsi, selon un premier aspect, la présente invention concerne une émulsion de type huile-dans-eau comprenant :

    A) une phase huile comprenant :

        a) au moins une amine primaire de formule $R-NH_2$ dans laquelle le radical R représente une chaîne alkyle, linéaire ou ramifiée, comprenant de 16 à 60 atomes de carbone, de préférence de 16 à 40 atomes de carbone ;
        b) éventuellement au moins un agent hydrophobant, avec la restriction que ledit agent hydrophobant est présent lorsque l'émulsion ne comprend que des amines primaires définies au paragraphe a) ci-dessus dans lesquelles le radical R comporte moins de 19 atomes de carbone, de préférence comporte 16, 17 ou 18 atomes de carbone, la quantité d'agent hydrophobant étant comprise entre 0% et 20%, de préférence supérieure ou égale à 1%, de préférence encore supérieure ou égale à 2%, et inférieure à 20%, de préférence inférieure à 10% en poids, par rapport au poids total de l'émulsion ; et

    B) une phase aqueuse.

Selon un aspect préféré, la phase huile de l'émulsion de la présente invention représente de 6% à 65% en poids par rapport au poids total de l'émulsion, de préférence de 8% à 50% en poids. La phase aqueuse est généralement constituée d'eau (complément à 100% en poids) et comprend éventuellement un ou plusieurs des autres composants de l'émulsion de l'invention qui sont partiellement ou totalement solubles dans l'eau.

La(les) amine(s) grasse(s) de formule $R-NH_2$ définie(s) ci-dessus est(sont) avantageusement présente(s) en quantité comprise entre 0,5% et 65%, de préférence entre 1% et 50%, de préférence encore entre 6 et 20% en poids par rapport au poids total de l'émulsion.

De manière à présenter une activité antimottante efficace, en particulier sur les engrais de type ammonitrates, l'émulsion de la présente invention comprend une quantité totale en amine(s) grasse(s) supérieure ou égale à 6% en poids, de préférence supérieure ou égale à 8% en poids. Cette quantité est avantageusement inférieure à 50%, de préférence inférieure à 40% en poids par rapport au poids total de la formulation.

Selon un mode de réalisation préféré, l'émulsion aqueuse de la présente invention comprend au moins une amine grasse de formule $R-NH_2$, dans laquelle R représente une chaîne alkyle, linéaire ou ramifiée, contenant de 20 à 22 atomes de carbone, la (ou les) amine(s) grasse(s) étant présente(s) de préférence en quantité supérieure ou égale à 6% en poids, de préférence supérieure ou égale à 8% et inférieure à 50% en poids, de préférence inférieure à 40% en poids par rapport au poids total de l'émulsion.

L'émulsion de la présente invention possède des propriétés à la fois antimottantes et hydrophobantes. L'effet hydrophobant est apporté par la (ou les) amine(s) grasse(s), notamment lorsque l'émulsion comprend au moins une amine grasse dont la chaîne alkyle comporte 19 ou plus atomes de carbone. Lorsque l'émulsion ne comporte que des amines grasses ayant des chaînes alkyle avec moins de 19 atomes de carbone (par exemple de 16 à 18 atomes de carbone), l'effet hydrophobant peut s'avérer insuffisant et dans ce cas, l'émulsion de la présente invention comprend en outre au moins un agent hydrophobant.

Il doit être compris qu'au moins un tel agent hydrophobant peut éventuellement et avantageusement être présent dans l'émulsion de la présente invention également lorsque ladite émulsion comprend uine ou plusieurs amine(s) grasse(s) ayant une chaîne alkyle de plus de 18 atomes de carbone.

L'agent hydrophobant décrit ci-dessus peut être de tout type connu de l'homme du métier, notamment choisi parmi ceux cités dans FR 2 692 166, et avantageusement un alcool gras à chaîne hydrocarbonée, linéaire ou ramifiée, comportant 15 ou plus atomes de carbone, tel que par exemple l'alcool cétylique, l'alcool stéarylique, l'alcool laurique, et leurs mélanges.

Comme autres exemples encore d'alcools gras, on peut citer l'alcool arachidique ($C_{20}$), l'alcool béhénique ($C_{22}$), le 1-triacontanol ($C_{30}$), et les alcools à chaîne hydrocarbonée, linéaire ou ramifiée, comportant jusqu'à 50 atomes de carbone, et les mélanges de deux ou plusieurs d'entre eux en toutes proportions.

La quantité d'agent(s) hydrophobant(s) présente dans l'émulsion selon la présente invention peut varier dans de grandes proportions, selon l'effet hydrophobant recherché, la nature de la (ou les) amine(s) grasse(s) antimottante(s), de la nature des produits minéraux destinés à recevoir l'émulsion, l'aspect desdits produits minéraux (pulvérulents ou granulés), et autre. De manière générale, la quantité d'agent(s) hydrophobant(s) est comprise entre 0% et 20%, de préférence supérieure ou égale à 1%, de préférence encore supérieure ou égale à 2%, et inférieure à 20%, de préférence inférieure à 10% en poids, par rapport au poids total de l'émulsion.

L'émulsion selon la présente invention peut également, et avantageusement, comprendre au moins un système tensio-actif. Par système tensio-actif, on entend au moins un tensio-actif, et de préférence un mélange d'au moins un tensio-actif non ionique et d'au moins un tensio-actif anionique.

Parmi les tensio-actifs non ioniques qui peuvent être utilisés, on peut citer, à titre d'exemples non-limitatifs, les alcools gras éthoxylés de HLB comprise entre 11 et 14, les esters d'acides gras et de polyols, les amides obtenues par réaction d'acides gras sur des alcanolamines, et autres. Parmi les tensio-actifs anioniques qui peuvent être utilisés, on peut citer, à titre d'exemples non-limitatifs, les esters phosphoriques , les phosphates, les alkyl- ou aryl-sulfonates, les alkyl- ou aryl- sulfates, et autres, ainsi que les mélanges de deux ou plusieurs d'entre eux.

Généralement, les émulsions selon la présente invention comprennent une quantité de tensio-actif(s) comprise entre 0,05% et 5% en poids par rapport au poids total de l'émulsion, et typiquement entre 0,1% et 2%, préférentiellement entre 0,1 et 1% d'au moins un tensio-actif non ionique et entre 0,1% et 2%, préférentiellement entre 0,1 et 1% d'au moins un tensio-actif anionique.

Selon un aspect tout particulièrement préféré les émulsions de la présente invention comprennent environ 1% d'au moins un tensio-actif non ionique et environ 1% d'au moins un tensio-actif anionique.

L'émulsion de la présente invention peut également, et avantageusement, comprendre un ou plusieurs épaississants, connus de l'homme du métier et classiquement utilisés pour les émulsions à phase continue aqueuse. Parmi ceux-ci, on peut citer, de manière non limitative, la cellulose et les éthers de cellulose comme la carboxyméthylcellulose, l'hydroxyéthylcellulose, la carboxyméthyl-hydroxy-éthyl cellulose, l'hydroxyéthyléthylcellulose, la méthylcellulose, l'hydroxypropylcellulose, les carraghénanes, la gomme xanthane, les poly(éthylèneglycols), le poly(alcool vinylique), les épaississants polymères de phase aqueuse couramment utilisés dans le domaine, et autres, ainsi que les mélanges de deux ou plusieurs d'entre eux.

Les épaississants polymères de phase aqueuse sont bien connus de l'homme du métier, et de préférence sont ceux choisis parmi, de manière non limitative, les polymères synthétiques tels que les polyacrylates et les polyacrylamides, les esters vinyliques hydrolysés. Les poly(-N-vinylpyrrolidones), les homo- et co-polymères, ainsi que les sels hydrosolubles, des copolymères styrène/anhydride maléique et *iso*-butylène/anhydride maléique peuvent également être utilisés comme agents épaississants.

Les agents épaississants de la phase aqueuse peuvent également être choisis parmi les agents épaississants à base minérale connus, comme par exemple, et de manière non limitative, la silice hydratée, les bentonites, et les silicates de magnésium et d'aluminium hydratés. Bien entendu des mélanges de deux ou plusieurs des épaississants cités ci-dessus peuvent être utilisés.

Généralement, la quantité d'épaississant(s) compris dans les émulsions de la présente invention est inférieure à 10% en poids par rapport au poids total de l'émulsion, de préférence comprise entre 0% et 10% en poids, de préférence encore entre 0,2% et environ 7% en poids, de manière encore plus préférée, entre environ 0,3% et environ 5% en poids par rapport au poids total de l'émulsion.

Les émulsions de la présente invention peuvent également comprendre un ou plusieurs traceurs U.V., connus de l'homme du métier, qui sont de manière générale et non limitative, des poudres solides, comprenant des composés comportant un groupement stilbénique substitué par des diamines et des groupements sulfoniques.

Lorsqu'ils sont présents, les traceurs U.V. peuvent être présents en quantité généralement comprise entre 50 ppm et 1000 ppm en poids par rapport au poids total de l'émulsion, de préférence entre 100 et 500 ppm.

La phase huile des émulsions de la présente invention peut éventuellement comprendre, outre au moins une amine grasse comme décrit ci-dessus, au moins une huile liquide à température et pression ambiantes, minérale, végétale ou animale, bien connue de l'homme du métier.

À titre d'exemples non limitatifs, parmi les huiles minérales, on peut citer les huiles liquides dérivées du pétrole constituées de mélanges de produits hydrocarbonés aliphatiques, naphténiques et aromatiques, et plus généralement les huiles paraffiniques ou naphténiques. Également à titre d'exemples non limitatifs, on peut citer parmi les huiles végétales ou animales, les huiles d'olive, de maïs, de soja, de canola, de coton, de noix de coco, de sésame, de tournesol, de graine de bourrache, de clou de girofle, de chènevis, de lin, de bois de Chine, de carthane, d'oïticica, de canéline, d'abrasin, de chanvre, de germe de blé, d'oenothère, les huiles de hareng, de foie de morue, de saumon, les dérivés d'huiles précitées comme les esters, en particulier les esters méthyliques, ainsi que les mélanges de deux ou plusieurs de ces huiles et dérivés en toutes proportions.

La quantité d'huile(s) présente dans l'émulsion de la présente invention peut varier dans de grandes proportions et est généralement comprise entre 0% (absence d'huile) et 50%, de préférence entre 5% et 48%, de préférence encore entre 25% et 45%, en poids par rapport au poids total de l'émulsion.

En outre, l'émulsion de la présente invention peut contenir un ou plusieurs autres additifs communément utilisés dans le domaine, parmi lesquels on peut citer de manière non-limitative les colorants, pigments, anti-mousses, et désaérateurs, notamment de type émulsion de silicone dans l'eau, par exemple les silicones organiques tels que le diméthylsilicone, et autres.

Les additifs, lorsqu'ils sont présents dans les émulsions selon la présente invention, le sont dans des quantités variant de plus de 0% à environ 2%, de préférence d'environ 0,01% à environ 1%, de préférence encore de 0,02% à 0,7% en poids par rapport au poids total de l'émulsion.

L'émulsion objet de la présente invention peut être préparée selon tout procédé de préparation d'émulsion connu de l'homme du métier, par exemple par mélange direct des divers composés constituant ladite émulsion avec des mélangeurs de type émulgateur, moulin, ultra-turrax, de type arbre à pâles, ce dernier type de mélangeur étant préféré en raison de sa simplicité de mise en oeuvre à l'échelon industriel.

L'émulsion selon la présente invention est de préférence pulvérisée sur les granulés minéraux dont on souhaite éviter la prise en masse, le mottage, la prise en eau, et en règle générale tout phénomène physique perturbant ou susceptible de perturber le bon écoulement desdits granulés par l'utilisateur final.

Selon un autre aspect, la présente invention concerne l'utilisation d'au moins une émulsion telle que définie précédemment pour éviter, empêcher, ou au moins ralentir le mottage de minéraux pulvérulents ou granulés, en particulier d'engrais, plus particulièrement d'engrais sous forme de granulés.

L'utilisation d'au moins une émulsion selon la présente invention permet également d'éviter, d'empêcher, ou tout au moins de ralentir la reprise en eau desdits minéraux pulvérulents ou granulés, grâce aux propriétés hydrophobantes de ladite émulsion.

Selon encore un autre aspect, la présente invention concerne un procédé de traitement de minéraux pulvérulents ou granulés, par exemple des engrais sous forme de granulés, comprenant au moins une étape de pulvérisation sur lesdits minéraux d'au moins une émulsion telle que décrite précédemment.

Les émulsions de la présente invention permettent de manière tout à fait avantageuse de procéder à la pulvérisation sur des produits minéraux pulvérulents ou granulés à des températures inférieures à celles appliquées habituellement dans le domaine. En effet, les émulsions de la présente invention sont liquides à température ambiante et peuvent ainsi être appliquées sur les minéraux pulvérulents ou granulés à des températures comprises entre 0°C et 60°C, de préférence entre 5°C et 50°C, de préférence encore entre 10°C et 40°C, par exemple à température ambiante.

De même, la température des minéraux pulvérulents ou granulés est généralement comprise entre 0°C et 60°C, de préférence entre 5°C et 50°C, par exemple à température ambiante. De manière tout à fait préférée, les minéraux pulvérulents ou granulés sont portés à la même température que les émulsions de l'invention, avantageusement les minéraux et les émulsions sont à température ambiante.

La quantité d'émulsion(s) selon la présente invention appliquée sur les minéraux pulvérulents ou granulés peut varier dans de grandes proportions selon la nature de l'émulsion, des minéraux à protéger, et de l'effet recherché.

Cette quantité est généralement du même ordre que celle utilisée pour les pulvérisations avec les formulations classiques connues de l'homme du métier et peut-être par exemple comprise entre 0,5 kg/tonne (kg/T) à 2 kg/T de minéraux, typiquement d'environ 1 kg d'émulsion par tonne de minéraux pulvérulents ou granulés.

L'invention est maintenant illustrée à l'aides des exemples de réalisation qui suivent et qui non pas pour but de limiter la portée de la présente invention, portée par ailleurs définie au moyen des revendications annexées à la présente description.

**Description des tests**

1) Enrobage

Dans l'industrie, les formulations antimottantes sont pompées et projetées de préférence par pulvérisation à travers une buse, à l'entrée d'un tambour enrobeur rotatif, sur les granulés (grains d'engrais) refroidis (généralement à une température comprise entre 25°C et 35°C).

Pour l'étude des émulsions selon l'invention, on reproduit l'enrobage des granulés au laboratoire dans un bol maintenu sous rotation avec pulvérisation de la formulation antimottante, par une buse, sur des échantillons d'environ 1 kg d'engrais. Le même type de pulvérisation et enrobage sur des quantités plus importantes ($\geq$ 10 kg) sont réalisés en bétonnière.

2) <u>Évaluation de la performance antimottante</u>

Dans l'industrie, l'efficacité antimottante est évaluée après examen des granulés (engrais) stockés pendant des durées et dans les conditions habituelles du stockage industriel des engrais : stockage vrac, et stockage en sacs pendant au moins 3 mois. L'efficacité du traitement est évaluée à l'issue de cette période par l'observation visuelle des grains : aspect de surface, évaluation de la quantité d'engrais motté (poids, dureté des mottes).

Pour l'étude des émulsions selon l'invention, on effectue au laboratoire, des essais accélérés grâce auxquels on estime la valeur du traitement par un pourcentage de protection. Des éprouvettes sont confectionnées avec 130 g à 140 g (en fonction de la densité des granulés) de granulés (engrais) placés dans des moules dont le diamètre intérieur est de 5 cm, et de hauteur égale à 9 cm.

Ces éprouvettes sont soumises à une compression statique sous une pression de 5 bars à 10 bars (volontairement plus élevée que celle subie par les engrais en conditions réelles) pendant une durée d'une semaine à température comprise entre 20°C et 35°C.

D'autres tests accélérés dits tests de « mottage conditionné » sont effectués sur engrais après conditionnement thermohygrométrique, et une mise sous presse. Ce conditionnement est effectué en enceinte climatique sur 450 g de granulés placés dans des paniers en rotation pendant 1 heure à 25°C, avec une humidité relative supérieure à l'humidité relative critique des engrais concernés. L'humidité critique relative est l'humidité relative, à une température donnée, à partir de laquelle l'engrais absorbe de l'eau.

Une compression identique à celle exposée ci-dessus est ensuite appliquée pendant 16 heures. Après compression, les éprouvettes cylindriques sont retirées des moules et placées longitudinalement entre les mâchoires d'un dynamomètre, afin de mesurer la force à la rupture transversale.

Cette force à la rupture transversale permet de déterminer l'indice de protection, exprimé en %, selon la formule suivante :

$$\% \text{ de protection} = (FT-FA)/FT*100$$

où FA est la force à la rupture transversale mesurée sur une éprouvette de granulés enrobés par l'émulsion selon l'invention, et FT représente la force à la rupture transversale mesurée sur un granulé non traité.

Chaque formulation fait l'objet de 2 ou 3 aliquotes afin d'écarter un éventuel résultat aberrant. Une formulation antimottante sera d'autant meilleure que FA est faible, donc l'indice de protection est élevé.

De nombreux essais comparatifs entre résultats laboratoire et résultats industriels sur des échantillons issus de tests industriels permettent de conclure que le classement obtenu au laboratoire reproduit fidèlement celui des essais de type industriel.

3) <u>évaluation de la performance hydrophobante</u>

On parle de propriété hydrophobante lorsque la formulation antimottante permet de réduire la prise d'humidité d'un granulé, notamment d'un granulé engrais, soumis à un degré d'hygrométrie supérieur à l'humidité critique relative (HCR) de l'engrais à la température donnée.

Pour l'étude des émulsions selon l'invention, on effectue au laboratoire, le test suivant : 80 g de granulés (granulés d'engrais) dans des pots en plastique ouverts sont placés dans une enceinte climatique pendant 6 heures à 25°C à au moins 75% d'humidité relative (ou plus, si la HCR de l'engrais est très élevée). La pesée des pots avant et après le test permet de comparer la prise en eau (HT) d'un témoin non enrobé, à celle du témoin enrobé par l'émulsion à évaluer (HA). L'indice de protection, exprimé en pourcentage est calculé selon la formule suivante :

$$\% \text{ de protection} = (HT-HA)/HT*100$$

Plus la prise en humidité est faible, plus l'indice de protection hydrophobante est élevé.

**Exemple 1 :**

Les produits utilisés pour réaliser les émulsions sont les suivants :

- huile minérale naphténique Nyfert® 110 commercialisée par la société Nynas ;
- amine grasse de suif hydrogéné Noram® SH commercialisée par la société CECA ;
- Acide gras polyéthoxylé (7OE) de HLB ~11, commercialisé sous le nom Remcopal® AO7 par la société CECA ;

- Huile de ricin hydrogénée polyéthoxylée de HLB -13, commercialisée sous le nom Remcopal® RH40 par la société CECA ;
- Polyoxyéther ricinoléique de HLB -12, commercialisé sous le nom Remcopal® R33 par la société CECA ;
- Mono $C_{10}$-$C_{14}$, diméthylbenzènesulfonate de sodium, commercialisé par la société Infineum, sous le nom de Synacto® 476 ;
- Eau déminéralisée.

Les émulsions suivantes sont préparées en introduisant la phase grasse contenant l'amine, dans la phase aqueuse sous agitation à l'ultra-turrax à 8000 tr.min-1.

Les viscosités des émulsions ainsi fabriquées sont mesurées avec un viscosimètre Brookfield à 20°C et 40°C. Lorsque les conditions ne sont pas précisées, il s'agit de mesures effectuées avec un mobile LV4 à 12 tour.min$^{-1}$. Les résultats sont rassemblés dans le tableau 1 ci-dessous :

-- Tableau 1 --

| Émulsion | Composition | Viscosité à 20°C (cPs) | Viscosité à 40°C (cPs) |
|---|---|---|---|
| A* | 5% Noram® SH<br>45% Nyfert® 110<br>5% Remcopal® RH40<br>45% eau déminéralisée | 78000 | 5900 |
| B* | 5% Noram® SH<br>40% Nyfert® 110<br>5% Remcopal® AO7<br>50% eau déminéralisée | 20500 | 750 |
| C* | 5% Noram® SH<br>40% Nyfert® 110<br>5% Remcopal® AO7<br>5% Synacto® 476<br>45% eau déminéralisée | 12600 | 850 (LV3, 3 tr.min$^{-1}$) 500 (LV3, 50 tr.min$^{-1}$) |
| D* | 5% Noram® SH<br>42,5% Nyfert® 110<br>2,5% Remcopal® AO7<br>2,5% Synacto® 476<br>47,5% eau déminéralisée | 11500 | 200 (LV3, 3 tr.min$^{-1}$) 67 (LV3, 50 tr.min$^{-1}$) |
| E* | 5% Noram® SH<br>42.5% Nyfert® 110<br>2,5% Remcopal® R33<br>2,5% Synacto® 476<br>47,5% eau | 10000 | 200 (LV3, 3 tr.min$^{-1}$) 38 (LV3, 50 tr.min$^{-1}$) |
| F* | 5% Noram® SH<br>45% Nyfert® 110<br>2,5% Synacto® 476<br>47,5% eau déminéralisée | 7250 | - |
| * : Hors invention | | | |

Les émulsions présentées dans le Tableau 1 montrent qu'il est possible d'émulsionner une phase huileuse comprenant au moins une amine grasse dans une solution aqueuse, notamment en présence d'un tensio-actif non ionique de HLB comprise entre 11 et 13. Ces émulsions se présentent sous la forme de liquides ou de crèmes, stables, et plus ou moins visqueux selon la température ambiante, et le système tensio-actif utilisé.

**Exemple 2 :**

Les émulsions présentées dans le Tableau 2 suivant sont obtenues en introduisant la phase grasse contenant l'amine et le tensio-actif non-ionique dans la phase aqueuse contenant le tensio-actif anionique, sous agitation à l'aide d'un mélangeur à pâle de type Rayneri, avec une vitesse de rotation comprise entre 200 et 500 tr.min-1. Les viscosités des émulsions ont été mesurées avec un viscosimètre Brookfield à 20 et 40°C avec un mobile LV4 à 12 tr.min-1.

-- Tableau 2 -

| Référence | Composition | Viscosité à 20°C (cPs) | Viscosité à 40°C (cPs) |
|---|---|---|---|
| G* | 5% Noram® SH<br>42,5% Nyfert® 110<br>2,5% Remcopal® AO7<br>2,5% Synacto® 476<br>47,5% eau déminéralisée | 8600 | < 100 |
| H* | 5% Noram® SH<br>42,5% Nyfert® 110<br>2,5% Remcopal® AO7<br>2,5% Synacto® 476<br>47,5% eau déminéralisée | 9200 | 160 |
| * : Hors invention | | | |

Les émulsions ainsi préparées sont testées sur des granulés d'engrais NPK13 8 25 de la société ROSIER. Les granulés ont été conditionnés pendant 1 heure à 25°C et 75% d'humidité relative, puis soumis pendant 16 heures à 5 bars de pression, selon le mode-opératoire décrit précédemment.

À titre d'exemple, l'enrobage avec des émulsions est comparé à celui obtenu avec un témoin à 6 % de Noram® SH dans l'huile Nyfert® 110, échantillon liquide à température ambiante. Le taux d'enrobage appliqué est d'environ 1,5 kg/T. Tous les produits ont été chauffés et pulvérisés à 40°C sur un engrais à 20°C . Les résultats obtenus sont présentés dans le Tableau 3 suivant :

-- Tableau 3 --

| | Force à la rupture (daN) | % de protection |
|---|---|---|
| Témoin non enrobé | 50 | - |
| Enrobé avec témoin (phase huile) | 18 | 64 |
| Enrobé avec émulsion G | 20 | 60 |
| Enrobé avec émulsion H | 18 | 64 |

Les résultats précédents permettent de constater que le recours à une formulation de type émulsion amine grasse + huile dans une phase continue eau, avec un taux global d'aminé grasse de 5% conduit à un niveau de protection antimottante similaire à celui obtenu avec 6% d'amine grasse dans l'huile, sans eau.

Dans les conditions précédemment citées, une pulvérisation à 40°C d'une émulsion contenant près de 50% d'eau n'apporte aucun effet négatif quant au mottage, comparativement à une formulation ne contenant qu'un vecteur huile.

**Exemple 3 :**

Outre les matières premières de l'exemple 1, les composés suivants sont utilisés :

- alcool gras polyethoxylé, de HLB -13, commercialisé sous le nom Remcopal® LP8 par la société CECA ;
- alcool gras polyethoxylé, de HLB -13, commercialisé sous le nom Remcopal® IT8,85 par la société CECA ;
- amine grasse $C_{16}$-$C_{22}$, commercialisée sous le nom de Noram® 42 par la société CECA ;
- alcool gras de suif hydrogéné, commercialisé par la société Cognis, sous le nom d'Hydrenol® S3 ;
- huile minérale paraffinique de type 150NS, commercialisée par la société Exxon ;

- antimousse à base de silicone pour phase aqueuse, commercialisé par la société BYK, sous la référence BY-094 ;

Les émulsions présentées dans le Tableau 4 ci-dessous ont été réalisées en émulsifiant la phase grasse contenant l'amine et les tensio-actifs dans la phase aqueuse (sauf pour l'émulsion O où la phase aqueuse est introduite dans le mélange huile + amine + tensio-actifs), avec un mélangeur à pâle, de type Rayneri et une vitesse de rotation de 1500 tr.min$^{-1}$. Les viscosités des émulsions sont mesurées avec un viscosimètre Brookfield à 20°C et 40°C. Lorsque les conditions ne sont pas précisées, il s'agit de mesures effectuées avec un mobile LV4 à 30 tour.min$^{-1}$. Les viscosités des émulsions laissées au repos à température ambiante pendant plus de 24 heures, et après agitation du flacon figurent entre parenthèses.

-- Tableau 4 --

| Émulsion | Composition | Viscosité à 20°C (cPs) | Viscosité à 40°C (cPs) |
|---|---|---|---|
| I* | 4% Noram® SH 34% Nyfert® 1% Remcopal® LP8 1% Synacto® 476 60% eau déminéralisée | 2719 | - |
| J | 4% Noram® 42 34% Nyfert® 1% Remcopal® LP8 1% Synacto® 476 60% eau déminéralisée | 1000 (920) | 300 |
| K | 8% Noram® 42 30% Nyfert® 1% Remcopal® LP8 1% Synacto® 476 60% eau déminéralisée | 2700 (2360) | 1280 |
| L | 8% Noram® 42 28% Nyfert® 2% Hydrenol® S3 1% Remcopal® LP8 1% Synacto® 476 60% eau déminéralisée | 3360 (3100) | 1400 |
| M | 8% Noram® 42 28% huile 150NS 2% Hydrenol® S3 1% Remcopal® IT8,85 1% Synacto® 476 60% eau déminéralisée | 2800 (860) | 900 |
| N | 8% Noram® 42 28% huile SN150 2% Hydrenol® S3 1% Remcopal® IT8,85 1% Synacto® 476 1% antimousse BYK-094 60% eau déminéralisée | 420 | 300 |

(suite)

| Émulsion | Composition | Viscosité à 20°C (cPs) | Viscosité à 40°C (cPs) |
|---|---|---|---|
| O | 9,95% de Noram 42<br>27,8% huile Nyfert<br>1% Remcopal IT8,85<br>1% Synacto476<br>59,65% eau<br>0,6% BYK-094 | 2700 *(1400)* | Émulsion obtenue par introduction de |
| * : Hors invention | | | |

Des tests de mottage ont été réalisés après pulvérisation de 0,9 kg/T des émulsions, sur granulés d'engrais CAN 27 sphérodisé fournis par la Société PEC-RHIN, à 20°C. Le test sous presse a été conduit pendant 5 jours à température ambiante sous 10 bars. Les résultats sont présentés dans le Tableau 5 suivant :

-- Tableau 5 --

| Type d'enrobage et température de l'émulsion | Force à la rupture (daN) | % de protection antimottante | % de protection hydrophobante |
|---|---|---|---|
| Témoin non enrobé | 150 | - | 1,44% de prise d'humidité |
| Enrobé avec émulsion I* *à température ambiante* | - | - | < 0 |
| Enrobé avec émulsion J *à température ambiante* | 60 | 61 | 14 |
| Enrobé avec émulsion K à *50°C* | 31 | 80 | 19 |
| Enrobé avec émulsion L à *50°C* | 30 | 81 | 25 |
| Enrobé avec émulsion M *à 40°C* | 21 | 85 | - |
| * : Hors invention | | | |

Ces résultats confirment qu'il est possible d'obtenir des propriétés anti-mottantes sur des engrais riches en nitrate d'ammonium avec une formulation de type émulsion de phase grasse dans l'eau selon la présente invention.

Des tests des mottage, après pulvérisation de 1 kg/T des émulsions selon l'invention sont réalisés sur des engrais d'ammonitrates haute densité, AN 33,5% prills grossis fournis par la société GPN une semaine après leur préparation. L'enrobage a été effectué sur une dizaine de kilos d'engrais à température ambiante, soumis à rotation dans une bétonnière. Le test sous presse a été conduit pendant 5 jours à température ambiante sous 10 bars.

-- Tableau 6 --

| Type d'enrobage et température de l'émulsion | Force à la rupture (daN) | % de protection antimottante | % de protection hydrophobante |
|---|---|---|---|
| Témoin non enrobé | 50 | - | 2,21% de prise d'humidité |
| Enrobé avec émulsion M *à 40°C* | 0 | 100 | 52 |
| Enrobé avec émulsion O *à 40°C* | 0 | 100 | 35 |
| Enrobé avec émulsion L *à 50°C* | 0 | 100 | 50 |
| Enrobé avec formulation commerciale Fluidiram® F925H de CECA à *80°C* | 0 | 100 | 50 |

Au vu de ces résultats, il apparaît clairement qu'il est possible d'obtenir une protection antimottante et hydrophobante avec une émulsion d'amine grasse + huile + alcool gras (agent hydrophobant), du niveau de celles d'une formulation pâteuse sur base huile minérale. Les résultats obtenus par exemple avec l'émulsion M ou avec l'émulsion L montrent qu'il est possible d'obtenir des degrés de protection, en termes d'anti-mottage et d'hydrophobation, par pulvérisation à 40°C ou 50°C, sur engrais à température ambiante, tout à fait comparables à ceux obtenus avec des formulations classiques pulvérisés à chaud sur des granulés chauffés à 80°C.

Les émulsions selon la présente invention, qui peuvent être pulvérisées à température ambiante, ou légèrement chauffées à une température inférieure aux températures classiquement appliquées dans le domaine (environ 80°C), présentent ainsi l'avantage d'éviter toute dégradation de ladite amine.

**Revendications**

1. Émulsion de type huile-dans-eau comprenant :

   A) une phase huile comprenant :

      a) au moins une amine primaire de formule R-NH$_2$ dans laquelle le radical R représente une chaîne alkyle, linéaire ou ramifiée, comprenant de 16 à 60 atomes de carbone, de préférence de 16 à 40 atomes de carbone ;
      b) éventuellement au moins un agent hydrophobant, avec la restriction que ledit agent hydrophobant est présent lorsque l'émulsion ne comprend que des amines primaires définies au paragraphe a) ci-dessus dans lesquelles le radical R comporte moins de 19 atomes de carbone, de préférence comporte 16, 17 ou 18 atomes de carbone, la quantité d'agent hydrophobant étant comprise entre 0% et 20%, de préférence supérieure ou égale à 1%, de préférence encore supérieure ou égale à 2%, et inférieure à 20%, de préférence inférieure à 10% en poids, par rapport au poids total de l'émulsion ; et

      B) une phase aqueuse.

2. Émulsion selon la revendication 1, dans laquelle la phase huile représente de 6% à 65% en poids, de préférence de 8% à 50% en poids par rapport au poids total de l'émulsion.

3. Émulsion selon la revendication 1, dans laquelle la(les) amine(s) grasse(s) de formule R-NH$_2$ est(sont) présente(s) en quantité comprise entre 0,5% et 65%, de préférence entre 1% et 50%, de préférence encore entre 6 et 20% en poids par rapport au poids total de l'émulsion.

4. Émulsion selon la revendication 1, dans laquelle la(les) amine(s) grasse(s) est(sont) de formule R-NH$_2$, R représente une chaîne alkyle, linéaire ou ramifiée, contenant de 20 à 22 atomes de carbone.

5. Émulsion selon la revendication 1, dans laquelle l'agent hydrophobant est un alcool gras à chaîne hydrocarbonée, linéaire ou ramifiée, comportant 15 ou plus atomes de carbone et jusqu'à 50 atomes de carbone.

6. Émulsion selon la revendication 1, comprenant en outre au moins une huile minérale, végétale ou animale, liquide à température et pression ambiantes, enune quantité comprise entre 0% et 50%, de préférence entre 5% et 48%, de préférence encore entre 25% et 45%, en poids par rapport au poids total de l'émulsion.

7. Émulsion selon la revendication 1, comprenant en outre au moins un système tensio-actif, et de préférence un mélange d'au moins un tensio-actif non ionique et d'au moins un tensio-actif anionique.

8. Émulsion selon la revendication 1, comprenant en outre au moins un épaississant, et/ou au moins un traceur U.V., et/ou au moins un additif choisi parmi les colorants, pigments, anti-mousses, et désaérateurs, et autres.

9. Utilisation d'au moins une émulsion selon l'une quelconque des revendications 1 à 8 pour éviter, empêcher, ou au moins ralentir le mottage de minéraux pulvérulents ou granulés, en particulier d'engrais, plus particulièrement d'engrais sous forme de granulés.

10. Utilisation selon la revendication 9, pour éviter, empêcher, ou au moins ralentir la reprise en eau desdits minéraux pulvérulents ou granulés.

11. Procédé de traitement de minéraux pulvérulents ou granulés comprenant au moins une étape de pulvérisation sur lesdits minéraux d'au moins une émulsion selon l'une quelconque des revendications 1 à 8.

**12.** Procédé selon la revendication 11, dans lequel la(les) émulsion(s) sont appliquée(s) à une température comprise entre 0°C et 60°C, de préférence entre 5°C et 50°C, de préférence encore entre 10°C et 40°C, sur des minéraux à une température comprise entre 0°C et 60°C, de préférence entre 5°C et 50°C, de préférence encore entre 10°C et 40°C.

**13.** Procédé selon la revendication 11, dans lequel la quantité d'émulsion(s) appliquée est comprise entre 0,5 kg/tonne (kg/T) à 2 kg/T de minéraux, typiquement d'environ 1 kg d'émulsion par tonne de minéraux.

**Patentansprüche**

**1.** Emulsion des Öl-in-Wasser-Typs, umfassend:

   A) eine Ölphase, umfassend:

   a) mindestens ein primäres Amin der Formel $R-NH_2$, worin der Rest R eine gerade oder verzweigte Alkylkette darstellt, die 16 bis 60 Kohlenstoffatome, vorzugsweise 16 bis 40 Kohlenstoffatome umfasst;
   b) gegebenenfalls mindestens ein Hydrophobierungsmittel, mit der Einschränkung, dass das Hydrophobierungsmittel vorhanden ist, wenn die Emulsion nur im vorstehenden Abschnitt a) definierte primäre Amine umfasst, in denen der Rest R weniger als 19 Kohlenstoffatome enthält, vorzugsweise 16, 17 oder 18 Kohlenstoffatome enthält, wobei die Menge des Hydrophobierungsmittels zwischen 0 Gew.-% und 20 Gew.-%, vorzugsweise mehr als oder gleich 1 Gew.-%, noch stärker bevorzugt mehr als oder gleich 2 Gew.-%, und weniger als 20 Gew.-%, vorzugsweise weniger als 10 Gew.-%, bezogen auf das Gesamtgewicht der Emulsion, beträgt; und

   B) eine wässrige Phase.

**2.** Emulsion nach Anspruch 1, wobei die Ölphase 6 Gew.-% bis 65 Gew.-%, vorzugsweise 8 Gew.-% bis 50 Gew.-%, bezogen auf das Gesamtgewicht der Emulsion, ausmacht.

**3.** Emulsion nach Anspruch 1, wobei das (die) Fettamin(e) der Formel $R-NH_2$ in einer Menge zwischen 0,5 Gew.-% und 65 Gew.-%, vorzugsweise zwischen 1 Gew.-% und 50 Gew.-%, noch stärker bevorzugt zwischen 6 und 20 Gew.-%, bezogen auf das Gesamtgewicht der Emulsion, vorhanden ist (sind).

**4.** Emulsion nach Anspruch 1, wobei das (die) Fettamin(e) die Formel $R-NH_2$ hat (haben), R eine gerade oder verzweigte Alkylkette mit 20 bis 22 Kohlenstoffatomen darstellt.

**5.** Emulsion nach Anspruch 1, wobei das Hydrophobierungsmittel ein Fettalkohol mit gerader oder verzweigter Kohlenwasserstoffkette ist, die 15 oder mehr Kohlenstoffatome und bis zu 50 Kohlenstoffatome enthält.

**6.** Emulsion nach Anspruch 1, die ferner mindestens ein pflanzliches oder tierisches, bei Umgebungstemperatur und -druck flüssiges Mineralöl in einer Menge zwischen 0 Gew.-% und 50 Gew.-%, vorzugsweise zwischen 5 Gew.-% und 48 Gew.-%, noch stärker bevorzugt zwischen 25 Gew.-% und 45 Gew.-%, bezogen auf das Gesamtgewicht der Emulsion, umfasst.

**7.** Emulsion nach Anspruch 1, die ferner mindestens ein Tensidsystem und vorzugsweise ein Gemisch von mindestens einem nicht-ionischen Tensid und mindestens einem anionischen Tensid umfasst.

**8.** Emulsion nach Anspruch 1, die ferner mindestens ein Verdickungsmittel und/oder mindestens einen UV-Tracer und/oder mindestens ein Additiv, ausgewählt aus Färbemitteln, Pigmenten, Entschäumern und Entgasern und dergleichen, umfasst.

**9.** Verwendung mindestens einer Emulsion nach einem der Ansprüche 1 bis 8, um das Verklumpen von pulverförmigen oder granulierten Mineralien, insbesondere von Düngemitteln, ganz besonders von Düngemitteln in Form von Granulaten, zu vermeiden, zu verhindern oder zumindest zu verlangsamen.

**10.** Verwendung nach Anspruch 9, um die Wasseraufnahme der pulverförmigen oder granulierten Mineralien zu vermeiden, zu verhindern oder zumindest zu verlangsamen.

**EP 2 480 325 B1**

11. Verfahren zur Behandlung pulverförmiger oder granulierter Mineralien, das mindestens einen Schritt der Zerstäubung mindestens einer Emulsion nach einem der Ansprüche 1 bis 8 auf diese Mineralien umfasst.

12. Verfahren nach Anspruch 11, wobei die Emulsion(en) bei einer Temperatur zwischen 0°C und 60°C, bevorzugt zwischen 5°C und 50°C, noch stärker bevorzugt zwischen 10°C und 40°C auf die Mineralien bei einer Temperatur zwischen 0°C und 60°C, bevorzugt zwischen 5°C und 50°C, noch stärker bevorzugt zwischen 10°C und 40°C aufgebracht wird (werden).

13. Verfahren nach Anspruch 11, wobei die aufgebrachte Menge der Emulsion(en) zwischen 0,5 kg/Tonne (kg/t) bis 2 kg/t Mineralien, üblicherweise etwa 1 kg Emulsion pro Tonne Mineralien, beträgt.

**Claims**

1. Emulsion of oil-in-water type comprising:

A) an oil phase comprising:

a) at least one primary amine of formula R-NH$_2$ in which the R radical represents a linear or branched alkyl chain comprising from 16 to 60 carbon atoms, preferably from 16 to 40 carbon atoms;
b) optionally at least one hydrophobing agent, with the restriction that said hydrophobing agent is present when the emulsion comprises only primary amines defined in section a) above in which the R radical comprises less than 19 carbon atoms, and preferably comprises 16, 17 or 18 carbon atoms the amount of hydrophobing agent being between 0% and 20% by weight, preferably greater than or equal to 1% by weight, more preferably greater than or equal to 2% by weight, and less than 20% by weight, preferably less than 10% by weight, with respect to the total weight of the emulsion; and

B) an aqueous phase.

2. Emulsion according to Claim 1, in which the oil phase represents from 6% to 65% by weight, preferably from 8% to 50% by weight, with respect to the total weight of the emulsion.

3. Emulsion according to Claim 1, in which the fatty amine(s) of formula R-NH$_2$ is (are) present in an amount of between 0.5% and 65% by weight, preferably between 1% and 50% by weight and more preferably between 6% and 20% by weight, with respect to the total weight of the emulsion.

4. Emulsion according to Claim 1, in which the fatty amine(s) is (are) of formula R-NH$_2$, R representing a linear or branched alkyl chain comprising from 20 to 22 carbon atoms.

5. Emulsion according to Claim 1, in which the hydrophobing agent is a fatty alcohol having a linear or branched hydrocarbon chain comprising 15 or more carbon atoms and up to 50 carbon atoms.

6. Emulsion according to Claim 1, additionally comprising at least one mineral, vegetable or animal oil which is liquid at ambient temperature and ambient pressure in an amount of between 0% and 50% by weight, preferably between 5% and 48% by weight and more preferably between 25% and 45% by weight, with respect to the total weight of the emulsion.

7. Emulsion according to Claim 1, additionally comprising at one surface-active system and preferably a mixture of at least one nonionic surfactant and at least one anionic surfactant.

8. Emulsion according to Claim 1, additionally comprising at least one thickener and/or at least one UV tracer and/or at least one additive chosen from dyes, pigments, antifoaming agents and deaerators, and the like.

9. Use of at least one emulsion according to any one of Claims 1 to 8, to avoid, prevent or at least slow down the caking of pulverulent or granular inorganic products, in particular of fertilizers, more particularly of fertilizers in the form of granules.

10. Use according to Claim 9, to avoid, prevent or at least slow down the absorption of water by said pulverulent or granular inorganic products.

11. Process for the treatment of pulverulent or granular inorganic products, comprising at least one stage of spraying at least one emulsion according to any one of Claims 1 to 8 over said inorganic products.

12. Process according to Claim 11, in which the emulsion(s) is (are) applied at a temperature of between 0°C and 60°C, preferably between 5°C and 50°C, more preferably between 10°C and 40°C, to inorganic products at a temperature of between 0°C and 60°C, preferably between 5°C and 50°C, and more preferably between 10°C and 40°C.

13. Process according to Claim 11, in which the amount of emulsion(s) applied is between 0.5 kg/metric ton (kg/T) and 2 kg/T of inorganic products, typically approximately 1 kg of emulsion per metric ton of inorganic products.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 1214006 A
- US 4846871 A
- WO 2006091076 A
- EP 1627865 A
- GB 1383718 A
- FR 2290248

- FR 2221175
- RU 2152375
- US 257478 A
- EP 0081008 A
- FR 2692166